# EUROPÄISCHE PATENTSCHRIFT

(11) **EP 3 619 465 B1**
(45) Veröffentlichungstag und Bekanntmachung des Hinweises auf die Patenterteilung: **15.03.2023**
(21) Anmeldenummer: 18724806.7
(22) Anmeldetag: 04.05.2018
(51) Int. Cl.: F21S 41/64, F21S 41/25, G02B 19/00, G02B 27/09, G02B 27/28

(54) **VORRICHTUNG UND VERFAHREN ZUM ERZEUGEN EINER AUSGANGSLICHTEMISSION UND SCHEINWERFER**
DEVICE AND METHOD FOR PRODUCING AN OUTPUT LIGHT EMISSION, AND HEADLIGHT
DISPOSITIF ET PROCÉDÉ DE PRODUCTION D'UNE ÉMISSION DE LUMIÈRE DE SORTIE ET PHARE

(30) Priorität: 05.05.2017 DE 102017109679
(43) Veröffentlichungstag der Anmeldung: 11.03.2020
(73) Patentinhaber: Volkswagen Aktiengesellschaft, 38440 Wolfsburg (DE)
(72) Erfinder: ROTH, Joscha, 30177 Hannover (DE); SCHRÖDER, Heiko, 38102 Braunschweig (DE); THOMSCHKE, Sebastian, 38104 Braunschweig (DE); NEUNER, Helge, 38300 Wolfenbüttel (DE); DIAS, Daniel, 65428 Rüsselsheim (DE); SCHNEIDER, Michael, 64285 Darmstadt (DE); MAYER, Ralf, 67295 Bolanden (DE); LUDEWIG, Bernd, 69469 Weinheim (DE)
(74) Vertreter: Reitstötter Kinzebach
(86) Internationale Anmeldenummer: PCT/EP2018/061594
(87) Internationale Veröffentlichungsnummer: WO 2018/202890

(56) Entgegenhaltungen:
- EP-A1- 3 032 168
- WO-A1-2018/001581
- DE-A1-102014 113 700
- DE-A1-102015 108 847
- DE-A1-102015 115 348
- DE-T2- 69 110 585
- DE-U1-202016 102 988
- JP-A- 2014 007 337
- JP-A- 2015 207 390
- US-A- 5 235 444

## Beschreibung

Die vorliegende Erfindung betrifft eine Vorrichtung zum Erzeugen einer Ausgangslichtemission und einen Scheinwerfer, insbesondere für ein Kraftfahrzeug, mit einer solchen Vorrichtung. Sie betrifft ferner ein Verfahren zum Erzeugen einer Ausgangslichtemission.

Die Verwendung von Flüssigkristallen zur Steuerung einer Lichtverteilung ist weit verbreitet und ermöglicht eine flexible und einfache Erzeugung und Anpassung von Lichtverteilungen für unterschiedlichste Anwendungsbereiche. Es gibt daher Bestrebungen, ihren Anwendungsbereich auch auf Scheinwerfer, insbesondere von Fahrzeugen, zu erweitern. Beispielsweise werden Technologien aus dem Bereich der Flüssigkristallanzeigen (*liquid crystal* d*isplay,* LCD) oder Flüssigkristalle auf Silizium (*liquid crystal on silicon,* LCoS) verwendet.

Bei dem in der DE 20 2016 102 988 U1 beschriebenen Scheinwerfer passiert das Licht einer Lichtquelle einen Polarisator und wird in zwei Anteile verschiedener Polarisation geteilt. Die beiden Anteile werden mittels LCoS-Chips moduliert und treffen auf einen zweiten Polarisator, der die Lichtbündel vereinigt und zumindest einen Teil des Lichts auf eine Abbildungsoptik lenkt.

Die in der WO 2015/018729 A1 beschriebene Beleuchtungsanordnung umfasst eine Lichtquelle, die Licht emittiert, das auf eine polarisationsabhängig reflektierende Folie trifft. Polarisiertes Licht, das durch die Folie hindurchtritt, trifft auf einen zweidimensionalen Bildgeber, der beispielsweise als LCoS ausgebildet sein kann. Das Licht wird in diesem Fall durch einen Polarisationsstrahlteiler auf den Bildgeber gelenkt, durch diesen moduliert und auf den Strahlteiler zurückgeworfen. In Abhängigkeit von seiner Polarisation wird das zurückgeworfene Licht durch den Strahlteiler transmittiert oder in Richtung der Lichtquelle reflektiert.

Bei dem Fahrzeugscheinwerfer gemäß der DE 10 2008 008 664 A1 wird ein LCoS-Display verwendet, um das von einer Lichtquelle erzeugte Licht zu reflektieren und eine an die Fahrverhältnisse angepasste Lichtverteilung zu erzeugen.

Aus der EP 3 032 168 A1 ist eine Fahrzeugleuchte bekannt, bei der das Licht einer Lichtquelle durch einen Strahlteiler in verschieden polarisierte Strahlen geteilt wird. Die Polarisationsrichtung wird durch ein Flüssigkristallelement gedreht, das Licht läuft wieder durch den Strahlteiler und wird schließlich ausgegeben.

Der vorliegenden Erfindung liegt die Aufgabe zugrunde, eine Vorrichtung und ein Verfahren der eingangs genannten Art sowie einen Scheinwerfer bereitzustellen, welche eine möglichst effiziente Nutzung der Lichtemission einer Lichtquelle erlauben und die eine besonders große Flexibilität bei dem benötigten Bauraum, insbesondere in einem Fahrzeug, bieten. Erfindungsgemäß wird diese Aufgabe durch eine Vorrichtung mit den Merkmalen des Anspruchs 1, einen Scheinwerfer mit den Merkmalen des Anspruchs 9 und ein Verfahren mit den Merkmalen des Anspruchs 11 gelöst. Vorteilhafte Ausgestaltungen und Weiterbildungen ergeben sich aus den abhängigen Ansprüchen.

Die erfindungsgemäße Vorrichtung zum Erzeugen einer Ausgangslichtemission umfasst eine Lichtquelle zum Emittieren von Licht und ein erstes polarisierendes Strahlteilerelement, das so angeordnet ist, dass zumindest ein Teil des emittierten Lichts darauf auftrifft. Dabei sind ein erstes reflektiertes Lichtbündel eines ersten Polarisationszustands und ein zweites transmittiertes Lichtbündel eines zweiten Polarisationszustand erzeugbar. Ferner umfasst die Vorrichtung ein erstes Flüssigkristallelement, das zumindest zwei Zustände aufweist, die mittels einer Steuereinheit ansteuerbar sind. Dabei ist das Flüssigkristallelement dazu eingerichtet, das erste Lichtbündel zumindest zum Teil zu reflektieren, wobei der Polarisationszustand des ersten Lichtbündels in Abhängigkeit von dem Zustand des ersten Flüssigkristallelement veränderbar ist. Dabei ist ferner das erste polarisierende Strahlteilerelement so angeordnet, dass das erste Lichtbündel nach der Reflexion an dem ersten Flüssigkristallelement darauf auftrifft und das erste Lichtbündel zur Erzeugung der Ausgangslichtemission zumindest teilweise auskoppelbar ist.

Dadurch kann vorteilhafterweise eine Ausgangslichtemission erzeugt werden, die besonders leicht an verschiedenste Bedürfnisse anpassbar ist und die das von der Lichtquelle emittierte Licht besonders effizient nutzt. Die Vorrichtung kann flexibel an den zur Verfügung stehenden Bauraum angepasst werden. Die Ausgangslichtemission kann ferner so erzeugt werden, dass eine hohe Beleuchtungsstärke bei einem gleichzeitig großen Winkelbereich erreicht wird. Zum Beispiel kann mit dem zur Verfügung stehenden Licht eine Verteilung so erzeugt werden, dass ein großer Winkelbereich ausgeleuchtet wird, während bestimmte Teilbereiche mit besonders großer Intensität beleuchtet werden.

Im Unterschied zu bekannten Systemen wird bei der Erfindung das erste polarisierende Strahlteilerelement nicht nur zur Auftrennung des ersten und zweiten Lichtbündel verwendet, sondern zumindest das erste Lichtbündel trifft nach der Reflexion an dem ersten Flüssigkristallelement wiederum auf das gleiche, erste polarisierende Strahlteilerelement. Die Vorrichtung kann daher so ausgelegt werden, dass die Zahl der verwendeten Bauteile möglichst gering gehalten werden kann und insbesondere kostenaufwändige Komponenten, wie etwa weitere polarisierende Strahlteilerelemente, eingespart werden können.

Die Erfindung adressiert mehrere Problemstellungen, die sich bei der Erzeugung einer hoch aufgelösten Lichtverteilung, insbesondere für einen hochauflösenden Scheinwerfer, mit Hilfe von Mikromodulatoren wie DMD, LCD oder Mikroscannern ergeben. Mikromodulatoren erfordern aufgrund ihrer geringen Baugröße Lichtquellen mit hoher Leuchtdichte, damit ein ausreichend hoher Lichtstrom effizient mittels des Modulators bereitgestellt und beeinflusst werden kann. Allerdings ist die Leuchtdichte heutiger Lichtquellen begrenzt. Um dennoch die hohen Anforderungen an die Beleuchtungsstärke, insbesondere im Automobilbereich, zu erreichen, wird typischerweise der Winkelbereich der Lichtverteilung verkleinert, sodass sich das Licht auf einen kleineren Raum verteilt und die erreichten Intensitäten erhöht werden können.

Dies führt jedoch zu einem kleinen ausgeleuchteten Raum, der die Flexibilität und die Möglichkeiten bei einer Umsetzung neuer sensorgesteuerter Lichtfunktionen einschränkt. Eine weitere Methode, die zu höheren Beleuchtungsstärken führt, ist die Vergrößerung des Modulators etwa durch Verwendung eines großen Flüssigkristall-Displays (*liquid crystal display,* LCD). Dabei lassen sich zwar die gewünschten hohen Beleuchtungsstärken der Lichtverteilung erzielen, allerdings wird zum Abbilden der Lichtverteilung auf den Modulator ein großes optisches System, insbesondere mit großen Linsen, benötigt. Da die Scheinwerferbaugrößen aufgrund von Designanforderungen immer kleiner werden, wird dies als nachteilig empfunden. Weiterhin weisen LCDs aufgrund ihres geringen Transmissionsgrades eine geringe optische Effizienz auf und die hohe Lichtleistung kann mit dem Modulator nicht vollständig genutzt werden, da dieser transmissiv durchleuchtet wird. Eine übermäßige Erhitzung des Bauteils kann zudem zu seinem Ausfall führen.

Andererseits erfordern Scan-Verfahren aufgrund ihrer zeitlich abhängigen Belichtung enorm hohe Peakleistungen zum Erreichen der lichttechnischen Anforderungen eines Scheinwerfers. Lichtquellen mit solchen Peakleistungen sind derzeit - zumindest im Automobilbereich - nicht praxistauglich.

Gemäß einer Ausgestaltung der erfindungsgemäßen Vorrichtung ist daher das Flüssigkristallelement als Flüssigkristall auf Silizium (*liquid crystal on silicon,* LCoS) ausgebildet. Dadurch kann vorteilhafterweise eine an sich bekannte Technik verwendet werden, um die Polarisationszustände der Lichtbündel zu beeinflussen. Insbesondere übersteigt die optische Effizienz eines LCoS diejenige eines LCD. Im Vergleich zu einer Ausführung mittels Mikrospiegelaktoren (*digital micromirrordevice,* DMD) bieten LCoS-Elemente den Vorteil, dass größere Modulatorflächen verwendet werden können, aus denen sich eine höhere Étendue ergibt, sodass mehr Licht über den LCoS abgebildet werden kann. Ein weiterer Vorteil bei der Verwendung von LCoS gegenüber DMD ist die Möglichkeit, dass die Lichtwege abhängig von der Polarisation getrennt werden können.

Bei der Reflexion des Lichts durch einen LCoS tritt das Licht zunächst durch eine Flüssigkristallschicht durch und trifft auf eine reflektierende Schicht, die insbesondere aus Silizium gebildet ist. Das reflektierte Licht tritt anschließend erneut durch die Flüssigkristallschicht hindurch. Bei dem Durchtritt durch die Flüssigkristallschicht kann die Polarisation des Lichts verändert werden, wobei insbesondere die Polarisationsrichtung des Lichts gedreht wird. Diese Veränderung des Polarisationszustands durch eine Flüssigkristallschicht ist an sich bekannt. Ferner ist es bekannt, durch Anlegen einer Spannung einen Zustand der Flüssigkristallschicht so zu verändern, dass eine bestimmte Veränderung des Polarisationszustands, beispielsweise eine Drehung der Polarisationsrichtung um einen bestimmten Winkel, erreicht wird. Bei der Verwendung eines LCoS ist dabei insbesondere zu berücksichtigen, dass das Licht zweimal durch die Flüssigkristallschicht durchtritt, das heißt, die dadurch erzielte Änderung der Polarisation erfolgt zweimal. Insbesondere ist der LCoS so eingerichtet, dass je nach dem Zustand des Flüssigkristallelement, das heißt insbesondere je nach der angelegten Spannung, eine Drehung der Polarisationsrichtung zwischen 0 und λ/4 beim einmaligen Durchtritt durch die Flüssigkristallschicht erzielt wird, wobei λ die Wellenlänge des durchtretenden Lichts bezeichnet.

Bei einer weiteren Ausbildung umfasst die Vorrichtung ferner zumindest ein Kühlelement, durch welches das erste und/oder zweite Flüssigkristallelement kühlbar ist. Die beim Betrieb der Vorrichtung anfallende Wärme kann dadurch einfach abgeführt werden, sodass vorteilhafterweise eine Schädigung der Flüssigkristallelemente durch übermäßige Wärme vermieden wird. Insbesondere können aktive und oder passive Kühlelemente verwendet werden.

Die Erzeugung der Lichtemission durch die Lichtquelle erfolgt auf an sich bekannte Weise, wobei unterschiedliche Techniken verwendet werden können. Beispielsweise kann das Licht durch eine weiße Leuchtdiode (*light emitting diode,* LED), eine RGB LED (LED mit roter, grüner und blauer Komponente), laseraktivierten Leuchtstoff oder einen RGB-Laser erzeugt werden. Alternativ oder zusätzlich kann das von der Lichtquelle emittierte Licht mittels einer optischen Faser in die Vorrichtung eingekoppelt werden. Bei Verwendung eines blauen Lasers, kann die durch die Vorrichtung erzeugte und durch den LCoS modulierte Ausgangslichtemission auf eine vor einer Projektionsoptik befindliche Leuchtstoffschicht geworfen werden, um eine Umwandlung in sichtbares Licht zu erreichen.

Das von der Lichtquelle emittierte Licht ist dabei hinsichtlich seiner Polarisation nicht eingeschränkt, es ist aber insbesondere unpolarisiert beziehungsweise zirkular polarisiert. Eine solche Polarisierung wird bei typischen Glühlampen und LEDs erhalten sowie bei gebräuchlichen Laserbeleuchtungen, deren Licht zunächst auf ein phosphoreszierendes Plättchen gelenkt wird, um eine polychromatische Lichtemission zu erzeugen. Die Vorrichtung kann ferner mit einer linear polarisierten Lichtquelle betrieben werden. Das von einer Lichtquelle emittierte Licht kann auch von mehreren erfindungsgemäßen Vorrichtungen verwendet werden, beispielsweise um anhand des von einer Lichtquelle emittierten Lichts mittels mehrerer erfindungsgemäßer Vorrichtungen eine bestimmte Lichtverteilung zu erzeugen.

Bei der Erfindung wird das von der Lichtquelle emittierte Licht insbesondere mittels des ersten polarisierten Strahlteilerelements in zwei linear polarisierte Komponenten aufgespalten, wobei insbesondere im Wesentlichen keine Absorption von Licht einer bestimmten Polarisation stattfindet. Dadurch wird vorteilhafterweise eine hohe Effizienz des Systems erreicht. Das polarisierende Strahlteilerelement ist auf an sich bekannte Weise gebildet, insbesondere mittels einer Folie oder einer optischen Struktur, die eine Reflexion und Transmission von Licht in Abhängigkeit von seiner linearen Polarisation erlaubt.

Die beiden aufgespaltenen Komponenten des von der Lichtquelle emittierten Lichts, das heißt das erste und das zweite Lichtbündel, werden jeweils auf einen eigenen Lichtpfad umgelenkt und ihre Polarisation kann durch das Flüssigkristallelement, insbesondere durch eine Drehung der Polarisationsrichtung, verändert werden. Diese veränderte Polarisation kann genutzt werden, um eine bestimmte Ausgangslichtemission zu erzeugen, deren Intensität mittels des Zustands des Flüssigkristallelements und der damit verbundenen Drehung der Polarisationsrichtung gesteuert werden kann. Insbesondere kann zum Vereinigen zweier Lichtbündel das erste oder ein zweites Strahlteilerelement verwendet werden, wobei unterschiedlich polarisierte Komponenten der Ausgangslichtemission überlagert werden und eine Ausgangslichtemission ausgekoppelt werden kann.

Bei einer nicht erfindungsgemäßen Ausbildung ist das erste Flüssigkristallelement ferner dazu eingerichtet, das zweite Lichtbündel zumindest zum Teil zu reflektieren. Dadurch kann vorteilhafterweise ein einzelnes Flüssigkristallelement dazu verwendet werden, eine Veränderung der Polarisationszustände der beiden Lichtbündel zu steuern.

Bei einer solchen Ausführungsform der Erfindung wird das Flüssigkristallelement besonders effizient verwendet, da es zur Veränderung der Polarisationszustände des ersten und des zweiten Lichtbündels verwendet wird. Insbesondere können reflektierende Elemente verwendet werden, um die Lichtbündel so auf einen optischen Pfad abzulenken, dass sie voneinander getrennt geführt werden können und dennoch beide auf das Flüssigkristallelement auftreten.

Bei einer weiteren nicht erfindungsgemäßen Ausbildung treffen das erste und das zweite Lichtbündel auf den gleichen Bereich des Flüssigkristallelements. Insbesondere treffen jeweils Teile des ersten und zweiten Lichtbündels auf den gleichen Bereich des Flüssigkristallelements. Dadurch wird vorteilhafterweise die gleiche Fläche des Flüssigkristallelements verwendet, um die Polarisationsrichtungen der unterschiedlich polarisierten Anteile des Lichts zu modulieren. Dies erlaubt zudem die Einsparung oder kleinere Dimensionierung kostenaufwändiger optischer Bauteile und einen kompakteren, einfacheren optischen Aufbau. Als "der gleiche Bereich" im Sinne der Erfindung wird insbesondere verstanden, dass die Lichtbündel im Wesentlichen auf die gleichen Bereiche treffen. Alternativ kann das Flüssigkristallelemente voneinander getrennte Bereiche aufweisen, auf welche die Lichtbündel jeweils treffen.

Ferner kann das Flüssigkristallelement so ausgebildet sein, dass an verschiedenen Positionen seiner Fläche das auftreffende und reflektierte Licht unterschiedlich moduliert wird, etwa durch eine Matrix von Bereichen, die separat ansteuerbar sind und die Polarisation des auftreffenden Lichts unabhängig voneinander modulieren können. Insbesondere treffen dabei Teile der beiden unterschiedlich polarisierten Anteile des Lichts jeweils auf die gleichen Bereiche auf der Oberfläche des Flüssigkristallelements.

Erfindungsgemäß umfasst die Vorrichtung ferner ein zweites Flüssigkristallelement, wobei das zweite Flüssigkristallelement dazu eingerichtet ist, das zweite Lichtbündel zumindest zum Teil zu reflektieren, wobei der Polarisationszustand des zweiten Lichtbündel in Abhängigkeit von dem Zustand des zweiten Flüssigkristallelement veränderbar ist. Durch die Verwendung von zumindest zwei Flüssigkristallelementen können die beiden Lichtbündel, die durch das erste polarisierende Strahlteilerelement anhand des emittierten Lichts erzeugt werden, getrennt voneinander in ihren Polarisationszuständen beeinflusst werden. Eine solche Ausführungsform erlaubt es daher, besonders komplexe Ausgangslichtemission zu erzeugen.

Bei einer nicht erfindungsgemäßen Weiterbildung treffen das erste und zweite Lichtbündel zur Erzeugung der Ausgangslichtemission auf das erste polarisierende Strahlteilerelement und werden vereinigt. Dadurch können vorteilhafterweise beide anhand des durch die Lichtquelle emittierten Lichts erzeugten Lichtbündel mit unterschiedlichen Polarisationszuständen zur Erzeugung der Ausgangslichtemission genutzt werden und es kann insbesondere eine besonders hohe Lichtintensität innerhalb der Ausgangslichtemission erreicht werden.

Bei der Vereinigung der Lichtbündel im Sinne der Erfindung erfolgt eine Überlagerung des Lichts so, dass keine räumliche Trennung zwischen den Lichtbündeln mehr besteht. Das Licht der Ausgangslichtemission tritt also nicht entsprechend den verschiedenen Lichtbündeln räumlich getrennt aus, sondern es kann ein Lichtbündel mit einer Überlagerung von Licht der beiden am ersten Strahlteilerelement getrennten Lichtbündel ausgekoppelt werden. Durch die Vereinigung der Lichtbündel kann erreicht werden, dass die Étendue der erzeugten Ausgangslichtemission nicht unnötig vergrößert wird.

Bei verschiedenen Ausführungsformen können das erste und zweite Lichtbündel vor der Vereinigung auf unterschiedliche Weise moduliert werden, sodass beispielsweise unterschiedlich gebildete Intensitätsverteilungen überlagert werden können. In diesem Fall kann die Ausgangslichtemission gebildet werden, indem für das erste beziehungsweise zweite Lichtbündel jeweils unterschiedliche Intensitätsverteilungen gebildet werden, etwa anhand einer unterschiedlichen Modulation der Polarisationszustände mittels des Flüssigkristallelements. Erfindungsgemäß umfasst die Vorrichtung ferner ein zweites polarisierendes Strahlteilerelement, auf welches das zweite transmittierte Lichtbündel trifft und durch welches das zweite Lichtbündel zur Erzeugung der Ausganglichtemission zumindest teilweise auskoppelbar ist. Dadurch können die durch das erste Strahlteilerelement getrennten Anteile des von der Lichtquelle emittierten Lichts separat ausgekoppelt und beispielsweise für verschiedene Lichtfunktionen oder für eine flexiblere Gestaltung der Ausgangslichtemission genutzt werden.

Bei einer solchen erfindungsgemäßen Ausführungsform ist es vorgesehen, dass das erste und zweite Lichtbündel nicht vereinigt, sondern so ausgekoppelt werden, dass die Ausgangslichtemission zumindest zwei räumlich getrennte Lichtbündel umfasst. Beispielsweise kann die Ausgangslichtemission Lichtbündel umfassen, die in unterschiedliche Richtungen verlaufen. Alternativ oder zusätzlich können die Lichtbündel nebeneinander oder in anderer Weise voneinander getrennt verlaufen. Zudem können die Lichtbündel der Ausgangslichtemission einen Überschneidungsbereich aufweisen, beispielsweise in einem Bereich einer Bildebene, wobei die Lichtbündel in diesem Bereich durch Überlagerung eine Abbildung erzeugen.

Erfindungsgemäß umfasst die Ausgangslichtemission eine erste Komponente und eine zweite Komponente, wobei die erste Komponente durch das erste polarisierende Strahlteilerelement auskoppelbar ist und die zweite Komponente durch das zweite polarisierende Strahlteilerelement auskoppelbar ist. Dabei sind die erste und die zweite Komponente an voneinander beabstandeten Positionen auskoppelbar. Erfindungsgemäß umfasst die erste Komponente der Ausgangslichtemission zumindest einen Teil des ersten reflektierten Lichtbündels und die zweite Komponente umfasst zumindest einen Teil des zweiten transmittierten Lichtbündels.

Dadurch kann vorteilhafterweise das Licht des ersten und des zweiten Lichtbündels besonders effizient so moduliert werden, dass die verschiedenen Komponenten der Ausgangslichtemission flexibel und an den Bedarf angepasst ausgebildet sind.

Insbesondere kann dabei vorgesehen sein, dass die erste Komponente kein Licht des ersten Lichtbündels und/oder dass die zweite Komponente kein Licht des zweiten Lichtbündels umfasst.

Bei einer weiteren Ausbildung ist das erste und/oder zweite Flüssigkristallelement als erste und/oder zweite Matrix von Bildpunkten ausgebildet. Insbesondere sind die Bildpunkte als Pixel (*picture elements*) ausgebildet.

Insbesondere ist im Bereich eines Bildpunkts eine Flüssigkristallschicht des Flüssigkristallelement separat ansteuerbar, das heißt, der Polarisationszustand des Lichts, das auf das Flüssigkristallelement im Bereich eines Bildpunkts auftrifft, wird in einer spezifischen Weise abhängig von der Ansteuerung des Bildpunkts verändert. Die Ansteuerung erfolgt insbesondere mittels einer Spannung, welche an der Flüssigkristallschicht des LCoS im Bereich des jeweiligen Bildpunkts angelegt wird.

Bei einer Weiterbildung ist zur Erzeugung der Ausganglichtemission das erste und zweite Lichtbündel mittels einer Projektionsoptik auskoppelbar. Dadurch kann vorteilhafterweise eine die ausgekoppelte Ausgangslichtemission durch die Projektionsoptik gebildet und modifiziert werden.

Die Projektionsoptik kann genutzt werden, die Eigenschaften der Projektion auf eine bestimmte Weise in Abhängigkeit von den Abbildungseigenschaften der Projektionsoptik zu bilden. Beispielsweise kann die Projektionsoptik eine Fokussierung oder Aufspreizung der Lichtbündel bewirken.

Die Projektionsoptik ist dabei auf an sich bekannte Weise gebildet, beispielsweise nach Art eines Objektivs. Sie kann so ausgebildet sein, dass ihre Abbildungseigenschaften eingestellt werden können, beispielsweise indem eine Brennweite eingestellt wird oder verzerrende Abbildungseigenschaften verändert werden. Die Projektionsoptik kann dazu beispielsweise Linsen und/oder reflektierende Elemente umfassen, deren Anordnung veränderbar sein kann, etwa um die Projektionsoptik für eine bestimmte Vorrichtung, etwa in einem Fahrzeug, anzupassen oder um eine automatische Anpassung der Abbildungseigenschaften an veränderte Umgebungsbedingungen vorzunehmen.

Bei einer Ausbildung ist zur Erzeugung der Ausganglichtemission das erste Lichtbündel mittels einer ersten Projektionsoptik und das zweite Lichtbündel mittels einer zweiten Projektionsoptik zumindest teilweise auskoppelbar. Durch die Verwendung separater Projektionsoptiken für die verschiedenen Lichtbündel kann vorteilhafterweise eine flexiblere und auf vielfältigere Weise gestaltbare Ausgangslichtemission erzeugt werden. Bei einer solchen Ausführungsform umfasst die Ausgangslichtemission zwei räumlich getrennte Teile, insbesondere zwei räumlich getrennte Lichtbündel.

Insbesondere wird durch die Projektionsoptik eine Abbildung projiziert. Zum Beispiel kann die Abbildung beim Einsatz der Vorrichtung in einem Fahrzeug auf einer Fahrbahn und/oder eine Umgebung des Fahrzeugs projiziert werden. Beispielsweise kann die Anordnung so erfolgen, dass eine Gegenstandsebene durch das Flüssigkristallelement, insbesondere einen LCoS, gebildet wird und ein Bild der dort modulieren Lichtverteilung in eine Bildebene projiziert wird. Insbesondere umfasst das Flüssigkristallelement eine Vielzahl von Bildpunkten, die beispielsweise anhand einer Matrix angeordnet sind, wobei für jeden Bildpunkt der Polarisationszustand des jeweils auftreffenden Lichts individuell moduliert werden kann.

Durch eine geeignete Führung des optischen Pfades, beispielsweise unter Einbeziehung eines Polarisationsfilters und/oder eines polarisierenden Strahlteilerelements, kann die Modulation der Polarisationszustände zur Erzeugung einer Intensitätsverteilung des Lichts verwendet werden. Durch die Projektionsoptik kann eine solche Intensitätsverteilung abgebildet werden, beispielsweise auf einer Straße oder in einer Bildebene, wobei insbesondere eine Ausgangslichtemission durch die spezifische Intensitätsverteilung in der Bildebene charakterisiert werden kann. Beispielsweise sehen rechtliche Vorgaben für die Verwendung von Scheinwerfern in Kraftfahrzeugen bestimmte Lichtverteilungen vor, die in einer bestimmten Bildebene relativ zu dem Scheinwerfer beziehungsweise zu dem Fahrzeug mit dem Scheinwerfer, bewertet werden.

Insbesondere umfasst die erzeugte Abbildung der Ausgangslichtemission eine Intensitätsverteilung in einer bestimmten Bildebene, die relativ zu der Vorrichtung angeordnet ist. Die Intensitätsverteilung kann dabei durch das ausgekoppelte erste oder zweite Lichtbündel erzeugt werden, alternativ oder zusätzlich kann eine Überlagerung der Lichtbündel verwendet werden, wobei diese dabei vereinigt werden können. Alternativ oder zusätzlich können Sie separat ausgekoppelt und für die Abbildung überlagert werden.

Bei einer weiteren Ausbildung ist die erste und/oder zweite Projektionsoptik dazu eingerichtet, anhand des eingekoppelten Lichtbündel die Ausganglichtemission so zu erzeugen, dass diese eine Abbildung mit zumindest einem inneren und einem äußeren Bereich umfasst, wobei die Abbildung so ausgebildet ist, dass der innere Bereich eine höhere Lichtintensität als der äußere Bereich aufweist. Dadurch können vorteilhafterweise besonders hohe Lichtintensitäten im inneren Bereich der Ausgangslichtemission erreicht werden, was für viele Anwendungen, insbesondere in Fahrzeugscheinwerfern, von großer Bedeutung ist.

Die Abbildung umfasst insbesondere eine Intensitätsverteilung, welche anhand einer Modulation der Polarisationszustände des Lichts in verschiedenen Bereichen des Flüssigkristallelement erzeugt wird. Insbesondere wird dazu eine Matrix von Bildpunkten des Flüssigkristallelements verwendet, durch die jeweils unterschiedliche Polarisationszustände des reflektierten Lichts beziehungsweise Modulationen davon erzeugt werden. Nach der Reflexion an dem Flüssigkristallelement tritt das Licht durch ein polarisierendes Strahlteilerelement, einen Polarisationsfilter oder ein anderes optisches Element durch, welches eine Umsetzung der verschiedenen Polarisationszustände in eine Intensitätsverteilung bewirkt. Auf diese Weise kann eine Abbildung der Verteilung der Polarisationszustände innerhalb eines Lichtbündels als Intensitätsverteilung erfolgen.

Beispielsweise ist zumindest eine Projektionsoptik als verzerrende Projektionsoptik ausgebildet, wobei insbesondere die mittleren Bildpunkte kleiner abgebildet werden als weiter außen angeordnete Bildpunkte. Hierdurch kann die Intensität in der Bildmitte der Lichtverteilung gesteigert werden, insbesondere um spezifische lichttechnische Anforderungen zu erreichen, etwa für einen Einsatz der Vorrichtung in einem Kraftfahrzeug.

Innere und äußere Bereiche sind dabei relativ zu einer Lichtverteilung in einer Bildebene definiert, auf welche die Abbildung durch die Projektionsoptik projiziert wird. Ferner ist in diesem Zusammenhang die höhere oder niedrigere Lichtintensität als spezifischer Wert zu verstehen. Das heißt, durch die Projektionsoptik wird eine Abbildung so erzeugt, dass bei der gleichen ursprünglichen Intensität der abgebildeten Lichtverteilung eine höhere oder niedrigere Intensität innerhalb der Abbildung, insbesondere in der Bildebene, erreicht wird. Das heißt, die Abbildungseigenschaften der Projektionsoptik führen zu einer geänderten Verteilung der Intensität innerhalb der erzeugten Abbildung. Unabhängig davon wird die abgebildete Intensitätsverteilung selbst betrachtet, innerhalb derer Bereiche höherer oder niedrigerer Intensität durch die Modulation der Polarisationszustände, etwa durch Bildpunkte eines LCoS, erzeugt werden.

In weiteren Ausführungsbeispielen kann die Intensitätsverteilung, die durch die Projektionsoptik gebildet wird, auch in anderer Weise erfolgen, insbesondere mit einer auf andere Weise ausgebildeten Verzerrung, wobei beispielsweise äußere Bereiche mit höherer Intensität als bei den inneren Bereichen abgebildet werden.

Bei einer Weiterbildung umfasst die Ausgangslichtemission eine Überlagerung von zumindest zwei Abbildungen, wobei die zumindest zwei Abbildungen mittels zumindest zweier Projektionsoptiken erzeugt werden. Die Überlagerung zweier Abbildungen zu einer Ausgangslichtemission ermöglicht vorteilhafterweise eine differenzierter ausgestaltete und besonders leicht veränderbare Ausbildung der Ausgangslichtemission.

Beispielsweise können Ausführungsformen der Erfindung vorsehen, dass anhand der beiden Lichtbündel, die durch das erste polarisierende Strahlteilerelement gebildet werden, zum Erzeugen der Ausgangslichtemission zwei Lichtbündel durch separate Projektionsoptiken ausgekoppelt werden. Die ausgekoppelten Lichtbündel können unabhängig voneinander moduliert werden, beispielsweise durch Reflexion an jeweils einem Flüssigkristallelement mit individuell ansteuerbaren Bildpunkten.

Der erfindungsgemäße Scheinwerfer umfasst zumindest eine Vorrichtung der oben beschriebenen Art. Die Erfindung kann dadurch vorteilhafterweise in einem besonders relevanten Bereich, insbesondere für Kraftfahrzeuge, eingesetzt werden. Die Vorrichtung kann dabei auf unterschiedliche Weise in den Scheinwerfer integriert sein.

Bei einer Ausgestaltung des erfindungsgemäßen Scheinwerfer umfasst dieser ferner zumindest eine Projektionsoptik mit Abbildungseigenschaften, durch welche das erste und/oder zweite Lichtbündel zur Erzeugung der Ausganglichtemission auskoppelbar ist. Dabei sind die Abbildungseigenschaften der Projektionsoptik mittels einer Steuereinheit einstellbar. Die Ausgangslichtemission kann auf diese Weise besonders einfach gebildet werden.

Beispielsweise können durch die Projektionsoptiken eine kleinere und eine größere Lichtverteilung erzeugt werden, die zum Erzeugen der Ausgangslichtemission überlagert werden. Ferner können räumlich zueinander versetzte Lichtverteilung erzeugt und überlagert werden. Die Projektionsoptik kann ferner so gebildet sein, dass ihre Abbildungseigenschaften veränderbar sind, beispielsweise durch eine Veränderung der Anordnung von optisch wirksamen Elementen relativ zueinander und/oder relativ zu anderen Komponenten des Scheinwerfers.

Insbesondere ist vorgesehen, dass für die Erzeugung der Ausgangslichtemission bei der Erfindung das von einer einzelnen Lichtquelle emittierte Licht verwendet wird, wobei die Ausgangslichtemission durch eine Überlagerung von Lichtverteilungen erzeugt werden kann, die mittels mehrerer Projektionsoptiken ausgekoppelt werden. Alternativ oder zusätzlich kann vorgesehen sein, dass mehrere der erfindungsgemäßen Vorrichtungen verwendet werden, beispielsweise in einem Fahrzeug mit zwei Scheinwerfern, und die durch die Vorrichtungen erzeugten Ausgangslichtemissionen wiederum überlagert werden.

Bei dem erfindungsgemäßen Verfahren zum Erzeugen einer Ausgangslichtemission wird durch eine Lichtquelle Licht emittiert. Zumindest ein Teil des emittierten Lichts trifft auf ein erstes polarisierendes Strahlteilerelement, wobei ein erstes reflektiertes Lichtbündel eines ersten Polarisationszustands und ein zweites transmittiertes Lichtbündel eines zweiten Polarisationszustands erzeugt werden. Das erste Lichtbündel wird zumindest zum Teil durch ein erstes Flüssigkristallelement reflektiert, wobei das erste Flüssigkristallelement zumindest zwei Zustände aufweist, die mittels einer Steuereinheit angesteuert werden, und wobei der Polarisationszustand des ersten Lichtbündels in Abhängigkeit von dem Zustand des ersten Flüssigkristallelement verändert wird. Das zweite Lichtbündel wird zumindest zum Teil durch ein zweites Flüssigkristallelement reflektiert wird, wobei der Polarisationszustand des zweiten Lichtbündels in Abhängigkeit von dem Zustand des zweiten Flüssigkristallelements verändert wird. Das erste Lichtbündel trifft nach der Reflexion an dem ersten Flüssigkristallelement auf das erste polarisierende Strahlteilerelement auf. Das erste Lichtbündel wird zur Erzeugung der Ausganglichtemission zumindest teilweise ausgekoppelt. Das zweite transmittierte Lichtbündel trifft erfindungsgemäß auf ein zweites polarisierendes Strahlteilerelement, durch welches das zweite transmittierte Lichtbündel zur Erzeugung der Ausgangslichtemission zumindest teilweise ausgekoppelt wird, und die Ausgangslichtemission umfasst eine erste Komponente und eine zweite Komponente, wobei die erste Komponente durch das erste polarisierende Strahlteilerelement ausgekoppelt wird und die zweite Komponente durch das zweite polarisierende Strahlteilerelement ausgekoppelt wird, wobei die erste und die zweite Komponente an voneinander beabstandeten Positionen ausgekoppelt werden.

Das erfindungsgemäße Verfahren ist insbesondere ausgebildet, durch die vorstehend beschriebene erfindungsgemäße Vorrichtung ausgeführt zu werden. Das Verfahren weist somit dieselben Vorteile auf wie das erfindungsgemäße Verfahren.

Die Erfindung wird nun anhand von Ausführungsbeispielen mit Bezug zu den Zeichnungen erläutert.
- Figur 1: zeigt ein Fahrzeug mit einem Ausführungsbeispiel der erfindungsgemäßen Scheinwerfer,
- Figur 2: zeigt ein erstes nicht erfindungsgemäßes Ausführungsbeispiel der Vorrichtung
- Figur 3: zeigt ein zweites Ausführungsbeispiel der erfindungsgemäßen Vorrichtung,
- Figuren 4A und 4B: zeigen ein drittes nicht erfindungsgemäßes Ausführungsbeispiel der Vorrichtung und
- Figuren 5A bis 5C: zeigen eine beispielhafte Simulation einer Intensitätsverteilung, wie sie durch das erfindungsgemäße Verfahren erzeugt werden kann.

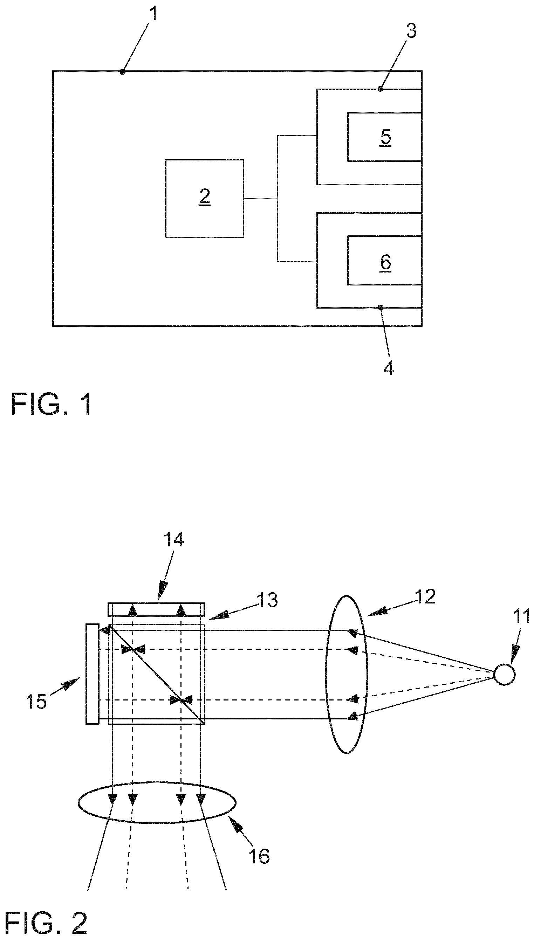

Mit Bezug zu Figur 1 wird ein Fahrzeug mit einem Ausführungsbeispiel der erfindungsgemäßen Scheinwerfer erläutert.

Ein Fahrzeug 1 umfasst zwei Scheinwerfer 3, 4, die jeweils eine Vorrichtung 5, 6 gemäß der Erfindung umfassen. Die Scheinwerfer 3, 4 sind mit einer Steuereinheit 2 gekoppelt, durch die insbesondere die Vorrichtungen 5, 6 angesteuert werden können, um Ausgangslichtemissionen einzustellen, die durch die Scheinwerfer 3, 4 erzeugbar sind.

Mit Bezug zu Figur 2 wird ein erstes Ausführungsbeispiel der Vorrichtung erläutert.

Die schematisch dargestellte Vorrichtung umfasst eine Lichtquelle 11, die unpolarisiertes Licht, hier mit einer zirkularen (SP-)Polarisation, emittiert. In dem Beispiel kann die Lichtquelle 11 beispielsweise als Leuchtdiode, Glühlampe oder auf andere, an sich bekannte Weise ausgeführt sein. Die Lichtquelle 11 kann ferner Licht für mehrere Vorrichtungen erzeugen, wobei das emittierte Licht auf unterschiedliche, an sich bekannte Weisen entlang eines optischen Pfades geführt werden kann.

Das von der Lichtquelle 11 emittierte Licht trifft bei dem Ausführungsbeispiel auf eine Beleuchtungsoptik 12 und wird durch diese gebündelt sowie auf ein polarisierendes Strahlteilerelement 13 gelenkt. Typischerweise weist das von einer Lichtquelle ausgesendete Licht zwei Polarisationsrichtungen auf, in Figur 2 verdeutlicht durch die gestrichelten und durchgezogenen Linien. Bei weiteren Ausführungsbeispielen ist keine Beleuchtungsoptik 12 oder eine andere Einrichtung mit vergleichbarer Funktion vorgesehen.

Das polarisierende Strahlteilerelement 13 ist auf an sich bekannte Weise ausgeführt, beispielsweise als *polarizing beam splitter* (PBS), und dient dazu, das unpolarisierte beziehungsweise zirkular polarisierte Licht in zwei Lichtbündel aufzuspalten, die jeweils linear polarisiert sind. Ein Lichtbündel mit einem bestimmten linearen Polarisationszustand wird dabei reflektiert, das andere Lichtbündel mit der entsprechenden komplementären linearen Polarisation kann durch das polarisierende Strahlteilerelement 13 durchtreten. Dabei wird im Wesentlichen kein Licht absorbiert, sondern das unpolarisierte beziehungsweise zirkular polarisierte Licht wird geteilt und es werden zwei Lichtbündel erzeugt, die S- beziehungsweise P-polarisiert sind.

Dies steht im Gegensatz zu bekannten Verfahren, etwa mit einem LCD, bei denen linear polarisiertes Licht mittels eines Polarisationsfilters erhalten wird, der Licht eines bestimmten Polarisationszustands absorbiert und komplementär linear polarisiertes Licht transmittiert. Bei dem Verfahren können dagegen beide komplementär zueinander polarisierten Lichtbündel genutzt werden und erhebliche Lichtverluste werden vermieden. Dies führt zu einer wesentlich gesteigerten Effizienz bei der Nutzung der Lichtquelle 11.

Das reflektierte Lichtbündel trifft bei dem Ausführungsbeispiel auf ein erstes Flüssigkristallelement 14, das transmittierte Lichtbündel trifft auf ein zweites Flüssigkristallelement 15. Die Flüssigkristallelement 14, 15 sind als LCoS 14, 15 ausgeführt. Sie umfassen jeweils eine Flüssigkristallschicht über einer reflektierenden Schicht, die insbesondere aus Silizium gebildet ist. Auf den LCoS 14, 15 treffendes Licht durchläuft zunächst die Flüssigkristallschicht, wird durch die reflektierende Schicht reflektiert und durchläuft die Flüssigkristallschicht ein zweites Mal. Dabei ist vorgesehen, dass die Flüssigkristallschicht durch Anlegen einer elektrischen Spannung in verschiedene Zustände gebracht werden kann, in denen die Polarisation von durchtretendem Licht auf eine bestimmte Weise geändert wird. Insbesondere erfolgt beim Durchtritt eine Drehung der Polarisationsrichtung um einen bestimmten Winkel, wobei aufgrund des zweimaligen Durchtritts eine Verdoppelung des eingestellten Drehwinkels erfolgt. Beispielweise kann durch eine angelegte Spannung eine Drehung der Polarisationsrichtung zwischen 0 und λ/4 beim einmaligen Durchtritt durch die Flüssigkristallschicht eingestellt werden, was in einer gesamten Drehung der Polarisationsrichtung des durch den LCoS 14, 15 reflektierten Lichts zwischen 0 und λ/2 resultiert.

Bei dem Ausführungsbeispiel umfasst die Flüssigkristallschicht eine Vielzahl einzeln ansteuerbarer Bereiche, die in einer Matrix angeordnet sind. Diese individuell ansteuerbaren Bereiche bilden eine Matrix von Bildpunkten des jeweiligen LCoS-Elements 14, 15, wobei jeder derer Bildpunkte individuell ansteuerbar ist. Dazu kann an die Flüssigkristallschicht im Bereich eines Bildpunktes eine individuelle Spannung angelegt werden. Ein auf den LCoS 14, 15 auftreffendes, linear polarisiertes Lichtbündel kann also in Abhängigkeit von dem Ort, an dem es auf die Flüssigkristallschicht des LCoS 14, 15 auftrifft, in seiner Polarisationsrichtung unterschiedlich moduliert werden.

Bei dem Ausführungsbeispiel treffen die durch das polarisierende Strahlteilerelement 13 erzeugten Lichtbündel jeweils auf den LCoS 14, 15 und werden von diesem auf das polarisierende Strahlteilerelement 13 zurückgeworfen. Falls die LCoS-Elemente 14, 15 in einem Zustand sind, in dem sie keine Änderung der Polarisation des auftreffenden Lichtes bewirken, werden die Lichtbündel an dem polarisierende Strahlteilerelement 13 so reflektiert beziehungsweise transmittiert, dass sie in Richtung der Lichtquelle 11 geworfen werden. Wurde jedoch die Polarisation zumindest eines der Lichtbündel durch eines der LCoS-Elemente 14, 15 verändert, so wird das zurückgeworfene Lichtbündel wieder durch das polarisierende Strahlteilerelement 13 in seine beiden linear polarisierten Anteile aufgeteilt, die entsprechend transmittiert oder reflektiert werden. Auf diese Weise kann zumindest ein Teil des zurückgeworfene Lichts in Richtung einer Projektionsoptik 16 geleitet und dort ausgekoppelt werden, um die Ausgangslichtemission zu erzeugen.

Beispielsweise kann durch das polarisierende Strahlteilerelement 13 S-polarisiertes Licht (gestrichelte Linie) reflektiert und P-polarisiertes Licht (durchgezogene Linie) durchgelassen werden. In diesem Fall trifft ein S-polarisiertes Lichtbündel auf einen ersten LCoS 14. Wenn der LCoS 14 eine Drehung der Polarisationsrichtung bewirkt, so ist das zurückgeworfene Licht zumindest teilweise P-polarisiert. Das Licht wird durch den LCoS 14 auf das polarisierende Strahlteilerelement 13 zurückgeworfen, wo der P-polarisierte Anteil nunmehr durchgelassen und in die Projektionsoptik 16 eingekoppelt wird. Der S-polarisierte Anteil wird dagegen reflektiert und in Richtung der Lichtquelle 11 zurückgeworfen. Umgekehrt wird in diesem Beispiel der P-polarisierte Anteil des Lichts, das von der Lichtquelle 11 emittiert wird, durch das polarisierende Strahlteilerelement 13 durchgelassen und trifft auf einen zweiten LCoS 15, durch den wiederum die Polarisationsrichtung des auftreffenden Lichts gedreht werden kann, sodass das auf das polarisierende Strahlteilerelement 13 zurückgeworfene Licht zumindest teilweise S-polarisiert ist und nunmehr reflektiert und in die Projektionsoptik 16 eingekoppelt werden kann.

Bei dem Ausführungsbeispiel ist also vorgesehen, dass die unterschiedlichen Polarisationszustände des durch die Lichtquelle 11 emittierten Lichts zunächst durch das polarisierende Strahlteilerelement 13 aufgetrennt, gegebenenfalls moduliert und anschließend wieder vereinigt werden. Je nach Konfiguration der LCoS-Elemente 14, 15 kann die Ausgangslichtemission also Anteile verschiedener Polarisationsrichtungen umfassen.

In einem weiteren Ausführungsbeispiel kann lediglich ein LCoS 14, 15 vorgesehen sein und das Lichtbündel des jeweils anderen Polarisationszustandes kann in anderer Weise ausgekoppelt oder verworfen werden, etwa durch Absorption. Dieser Fall ähnelt dem Vorgehen bei bekannten Vorrichtungen, bei denen lediglich eine Polarisationsrichtung des von der Lichtquelle 11 emittierten Lichts zur Erzeugung einer Ausgangslichtemission genutzt wird. In diesem Fall wird das von der Lichtquelle 11 emittierte Licht nicht vollständig genutzt und es wird insbesondere eine um etwa 50 % geringere Effizienz erreicht. Das heißt, durch das in Figur 2 illustrierte Konzept können beide Polarisationsrichtungen genutzt und damit ein erhöhter Wirkungsgrad gegenüber bekannten Vorrichtungen erreicht werden.

Die LCoS-Elemente 14, 15 umfassen bei dem Ausführungsbeispiel jeweils eine Matrix von Bildpunkten, in deren Bereich die der Flüssigkristallschicht jeweils individuell angesteuert werden kann. Auf diese Weise kann ein Bild mittels der Veränderung der Polarisationsrichtung und abhängig von der Auflösung der LCoS-Elemente 14, 15 moduliert werden, wobei die Polarisationsrichtung auftretenden Lichts in Abhängigkeit von der Ansteuerung der Bildpunkte verändert wird.

Bei einem weiteren Ausführungsbeispiel kann eine Laserlichtquelle mit einer definierten linearen Polarisation als Lichtquelle 1 verwendet werden. In diesem Fall nur ein LCoS 14, 15 benötigt. Wird ein blauer Laser genutzt, welcher insbesondere elektromagnetische Strahlung im ultravioletten, das heißt unsichtbaren Bereich emittiert, kann das mittels des LCoS 14, 15 durch Modulation der Polarisation erzeugte Bild auf einen Leuchtstoff projiziert werden, der sich vor der Projektionsoptik befindet und durch den eine Lichtemission im Bereich des sichtbaren Lichts erzeugt und abgebildet werden kann.

Alternativ oder zusätzlich kann eine RGB-Lichtquelle (etwa Laser oder LED) verwendet werden. Ferner kann ein mehrfarbiges Bild erzeugt werden, wobei hier insbesondere ein sequenzieller Aufbau mittels mehrerer Lichtkanäle vorgesehen sein kann, beispielsweise durch eine entsprechende Schaltung der Lichtquelle. Dies kann jedoch mit einer geringeren Ausgangsleistung der Ausgangslichtemission einhergehen, da die Farbkanäle rot, grün und blau nacheinander adressiert werden müssen.

Die Beleuchtungsoptik 12 und die Projektionsoptik 16 sind auf an sich bekannte Weise gebildet und können insbesondere mehrere Linsen umfassen. Die Projektionsoptik kann beispielsweise nach Art eines Objektivs ausgebildet sein und es kann vorgesehen sein, dass ihre Abbildungseigenschaften einstellbar sind. Beispielsweise kann eine veränderliche beziehungsweise einstellbare Brennweite vorgesehen sein. Ferner können Abbildungseigenschaften vorgesehen sein, die etwa zu einer verzerrenden Abbildung führen. Ein Beispiel hierfür ist weiter unten im Detail erläutert. Die Projektionsoptik kann ferner reflektierende Elemente und/oder andere optische Elemente umfassen. Die Anordnung der optischen Elemente, insbesondere Linsen und Spiegel, kann veränderbar sein. Ferner kann vorgesehen sein, dass durch die Steuereinheit 2 eine Einstellung der Beleuchtungsoptik 12 und/oder der Projektionsoptik 16 vorgenommen werden kann.

Bei einem weiteren Ausführungsbeispiel ist vorgesehen, dass bei zumindest einem der LCoS-Elemente 14, 15 ein Kühlelement so angeordnet ist, dass Wärme von dem LCoS 14, 15 abgeführt werden kann. Die Verwendung eines LCoS 14, 15 in der in Figur 2 dargestellten Weise führt typischerweise zu einer Erwärmung, die bei einer hohen Eingangsleistung, das heißt bei einer hohen Intensität des durch die Beleuchtungsoptik 12 eingekoppelten Lichts, bis zu einer Überhitzung und Beschädigung des LCoS 14, 15 führen kann. Ein Vorteil der Verwendung von LCoS-Elementen 14, 15, wie es die Erfindung ermöglicht, liegt darin, dass eine Kühlung besonders einfach implementiert werden kann, insbesondere indem die rückwärtige, der Flüssigkristallschicht abgewandte Seite in thermischem Kontakt mit einem Kühlelement angeordnet wird. Das Kühlelement kann auf an sich bekannte Weise passiv oder aktiv ausgebildet sein.

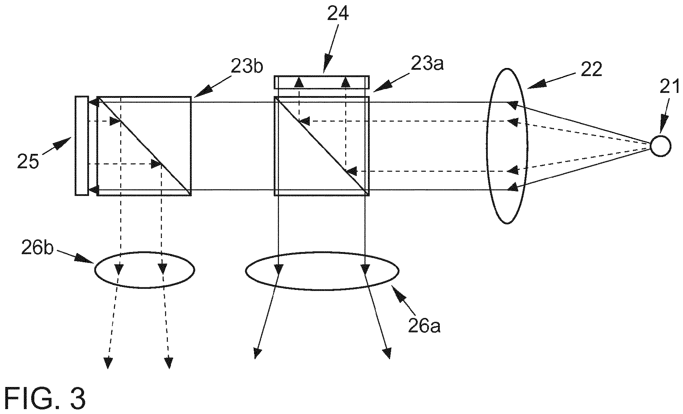

Mit Bezug zu Figur 3 wird ein zweites Ausführungsbeispiel der erfindungsgemäßen Vorrichtung erläutert. Dabei wird insbesondere auf die Unterschiede zu dem oben erläuterten ersten Ausführungsbeispiel eingegangen.

Bei dem in Figur 3 dargestellten Ausführungsbeispiel wird die Trennung der beiden Lichtbündel mit verschiedenen Polarisationsrichtungen genutzt, um eine Ausgangslichtemission mittels zweier Projektionsoptiken 26a, 26b zu erzeugen.

Das von der Lichtquelle 21 emittierte Licht wird mittels der Beleuchtungsoptik 22 auf ein erstes polarisierendes Strahlteilerelement 23a gerichtet und dort, wie bereits oben anhand von Figur 2 beschrieben, in zwei komplementär zueinander linearer polarisierte Lichtbündel aufgeteilt. Dazu wird ein erstes Lichtbündel einer ersten Polarisationsrichtung reflektiert, während ein zweites Lichtbündel der komplementären zweiten Polarisationsrichtung transmittiert wird.

Das erste Lichtbündel (gestrichelte Linie) trifft auf einen ersten LCoS 24 und kann durch den Zustand der Flüssigkristallschicht des LCoS 24 in seiner Polarisation beeinflusst werden. Das erste Lichtbündel wird an dem LCoS 24 reflektiert und trifft ein weiteres Mal auf das polarisierende Strahlteilerelement 23a, wo der nach der Modulation am LCoS 24 verbleibende Anteil der ersten Polarisationsrichtung in Richtung der Lichtquelle reflektiert und der Anteil der komplementären zweiten Polarisationsrichtung in Richtung einer ersten Projektionsoptik 26a gelenkt wird. In Abhängigkeit von den Abbildungseigenschaften der ersten Projektionsoptik 26a wird eine erste Komponente der Ausgangslichtemission erzeugt.

Das zweite Lichtbündel der komplementären zweiten Polarisationsrichtung (durchgezogene Linie) trifft auf ein zweites polarisierendes Strahlteilerelement 23b, das bei dem Ausführungsbeispiel auf gleiche Weise wie das erste polarisierende Strahlteilerelement 23a ausgebildet ist. Das heißt, das zweite Lichtbündel wird auch in dem zweiten polarisierenden Strahlteilerelement 23b transmittiert und trifft auf einen zweiten LCoS 25. Dieser kann, analog zu dem oben beschriebenen ersten LCoS 24, die Polarisationsrichtung des auftreffenden und reflektierten Lichts modulieren. Das an dem zweiten LCoS 25 reflektierte Licht weist nun eine in Abhängigkeit von den Zustand der Flüssigkristallschicht des zweiten LCoS 25 modulierte Polarisation auf und kann zum Teil an dem zweiten polarisierende Strahlteilerelement 23b reflektiert beziehungsweise transmittiert werden. Der reflektierte Anteil wird auf eine zweite Projektionsoptik 26b gelenkt und kann durch diese ausgekoppelt werden. Durch die zweite Projektionsoptik 26b wird eine zweite Komponente der Ausgangslichtemission erzeugt, die wiederum von den Abbildungseigenschaften der zweiten Projektionsoptik 26b abhängt.

Analog zu dem ersten, mit Bezug zu Figur 2 erläuterten Ausführungsbeispiel ist auch bei dem in Figur 3 dargestellten Ausführungsbeispiel vorgesehen, dass die LCoS-Elemente 24, 25 jeweils eine Matrix von Bildpunkten aufweisen, in deren Bereich die Flüssigkristallschicht individuell ansteuerbar ist. Das heißt, für jeden Bildpunkt kann der Polarisationszustand des an dem LCoS 24, 25 reflektierten Lichts individuell moduliert werden.

Es kann vorgesehen sein, dass die beiden Projektionsoptiken 26a, 26b unterschiedliche Abbildungsmaßstäbe aufweisen. Indem beispielsweise die Abbildung der anhand der Modulation an dem LCoS 24, 25 erzeugten Bildes durch eine Projektionsoptik 26a, 26b in unterschiedlichem Maßstab erfolgt, kann eine höhere oder niedrigere Intensität des Lichts an einer Position der Abbildung erreicht werden. Dazu erfolgt die Projektion so, dass die Abbildung auf eine kleinere oder größere Fläche erfolgt und die hier daraus folgende Lichtstrom entsprechend größer oder kleiner ist. Eine der Projektionsoptiken 26a, 26b kann so beispielsweise als eine Art *Booster* umgesetzt werden, um eine bestimmte hohe Beleuchtungsstärke in einem kleineren Bereich der Ausgangslichtemission zu erreichen. Die Ausgangslichtemission umfasst dann insbesondere einen Bereich mit geringerer und einen anderen Bereich mit einer höheren Lichtintensität.

Ferner können die Projektionsoptiken 26a, 26b verschiedene Bereiche innerhalb der Ausgangslichtemission betreffen, wobei insbesondere räumlich getrennte Bereiche beleuchtet werden. Ferner können die beiden Projektionsoptiken26a, 26b mit unterschiedlichen Abbildungseigenschaften, beispielsweise mit verschiedener Verzerrung, unterschiedlichem Abbildungsmaßstab und/oder verschiedener Brennweite ausgeführt sein.

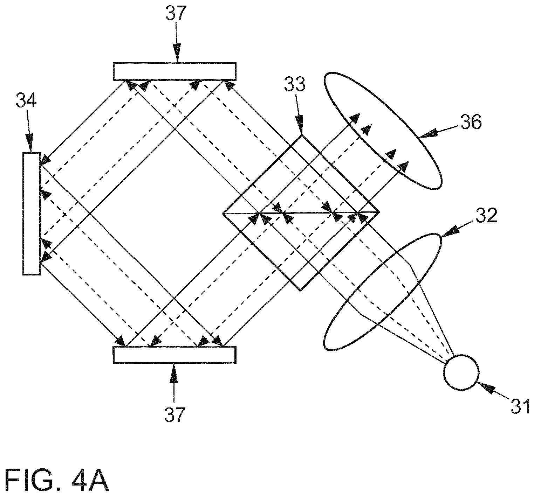

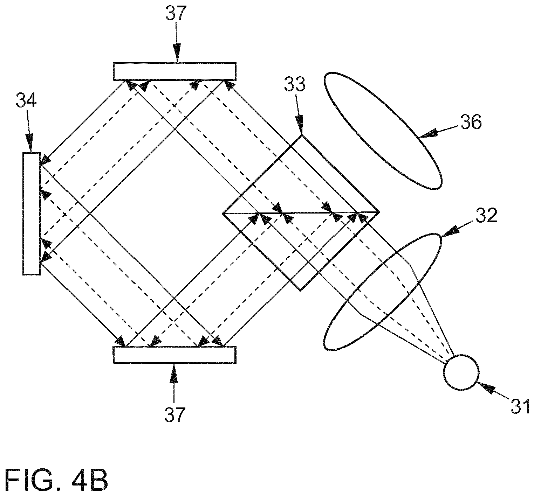

Mit Bezug zu den Figuren 4A und 4B wird ein drittes Ausführungsbeispiel der Vorrichtung erläutert. Dabei wird insbesondere auf die Unterschiede zu dem oben erläuterten ersten und zweiten Ausführungsbeispiel eingegangen.

Bei diesem Ausführungsbeispiel wird die Erfindung mittels eines einzelnen polarisierenden Strahlteilerelements 33 und eines einzelnen LCoS 34 verwirklicht. Das heißt, unterschiedlich linear polarisierte Anteile des von der Lichtquelle 31 erzeugten Licht werden separat optisch geführt und können gemeinsam für die Erzeugung der Ausgangslichtemission verwendet werden. Dabei können jedoch beide Anteile mit verschiedenen Polarisationsrichtungen mittels des einen LCoS 34 moduliert werden. Insbesondere treffen dabei die unterschiedlich polarisierten Anteile des Lichts im gleichen Bereich auf den LCoS 34, das heißt, es wird die gleiche Fläche des LCoS 34 verwendet, um die Polarisationsrichtungen zu modulieren. Dadurch können kostenaufwändige optische Bauteile eingespart werden und der optische Aufbau kann besonders einfach erfolgen.

Ferner kann der LCoS 34 so ausgebildet sein, dass an verschiedenen Positionen der Fläche des LCoS 34 das auftreffende und reflektierte Licht unterschiedlich moduliert wird. Beispielsweise kann innerhalb der Fläche des LCoS 34 eine Matrix nach Art von Bildpunkten (*picture elements,* Pixel) ausgebildet sein, wobei jedem Bildpunkt eine separat ansteuerbare Fläche entspricht und für jeden Bildpunkt der Matrix eine von den anderen Bildpunkten unabhängige Modulation vorgenommen werden kann. Insbesondere treffen dabei Teile der beiden unterschiedlich polarisierten Anteile des Lichts jeweils auf die gleichen Bildpunkte des LCoS 34.

Figur 4A zeigt die Vorrichtung gemäß dem Ausführungsbeispiel in einem ON-Zustand, während Figur 4B die Vorrichtung in einem OFF-Zustand zeigt. Das heißt, bei dem Ausführungsbeispiel sind hier die Extremzustände gezeigt, während Zwischenzustände, wie bereits oben anhand der Figuren 2 und 3 erläutert, selbstverständlich ebenfalls denkbar sind.

Von der Lichtquelle 31 emittiertes Licht wird mittels der Beleuchtungsoptik 32 auf das polarisierende Strahlteilerelement 33 gelenkt, wo ein erstes und ein zweites Lichtbündel durch Reflexion beziehungsweise Transmission der beiden zueinander komplementären Polarisationsrichtungen erzeugt werden. Die beiden Lichtbündel werden jeweils durch Spiegel 37 auf den LCoS 34 gelenkt, wo sie durch die Flüssigkristallschicht des LCoS 34 durchtreten, dahinter reflektiert werden und ein weiteres Mal die Flüssigkristallschicht durchlaufen. Bei dem Ausführungsbeispiel ist, wie bereits bei den oben erläuterten Ausführungsbeispiel, vorgesehen, dass die Flüssigkristallschicht Bildpunkte umfasst, die jeweils individuell mittels einer angelegten Spannung ansteuerbar sind. Je nach dem Zustand eines Bildpunktes, das heißt in Abhängigkeit von der angelegten Spannung, wird die Polarisation von durch die Flüssigkristallschicht durchtretendem Licht verändert, wobei insbesondere eine Drehung der Polarisationsrichtung um einen bestimmten Winkel erfolgt.

Bei dem in Figur 4A als ON-Zustand dargestellten Fall wird im Unterschied zu dem in Figur 4B als OFF-Zustand dargestellten Fall die Polarisation des auf den LCoS 34 treffenden Lichts nicht beeinflusst.

Bei dem in Figur 4A dargestellten ON-Zustand trifft Licht der als gestrichelte Linie angedeuteten Polarisation zunächst auf das polarisierende Strahlteilerelement 33 und wird von diesem auf einen Spiegel 37 umgelenkt. Dieser reflektiert das Licht weiter auf den LCoS 34, der die Polarisation in diesem Fall nicht beeinflusst und das Licht auf einen weiteren Spiegel 37 reflektiert. Dieser reflektiert das Licht auf das polarisierende Strahlteilerelement 33, an dem das Licht wiederum reflektiert und in Richtung der Projektionsoptik 36 umgelenkt wird.

Das Licht der anderen Polarisationsrichtung, als durchgezogene Linie angedeutet, wird durch das polarisierende Strahlteilerelement 33 transmittiert und wird über einen Spiegel 37 auf den LCoS 37 reflektiert. Dieser ändert die Polarisationseigenschaften in diesem Fall nicht und reflektiert das Licht über einen weiteren Spiegel 37 auf das polarisierende Strahlteilerelement 33. Das Licht tritt wieder hindurch und wird in die Projektionsoptik 96 eingekoppelt.

Somit können beide Polarisationsrichtungen der Lichtquelle 31 unter Verwendung nur eines LCoS 34 verwendet werden.

Bei dem in Figur 4B dargestellten OFF-Zustand wird das auf den LCoS 34 fallende Licht in seiner Polarisation so verändert, dass das von der Lichtquelle 31 ausgesendete Licht letztendlich in diese zurück reflektiert wird und kein Licht in die Projektionsoptik 36 gelangt. Insbesondere wird dabei an dem LCoS 34 eine Drehung der Polarisationsrichtung um 90° beziehungsweise λ/2 erreicht.

Bei Zwischenzuständen, das heißt, wenn die Polarisationsrichtung durch den LCoS 34 um einen Winkel zwischen 0 und 90° gedreht wird, wird lediglich ein Teil des Lichts durch die Projektionsoptik 36 ausgekoppelt, während der Rest in Richtung der Lichtquelle 31 zurückgeworfen wird.

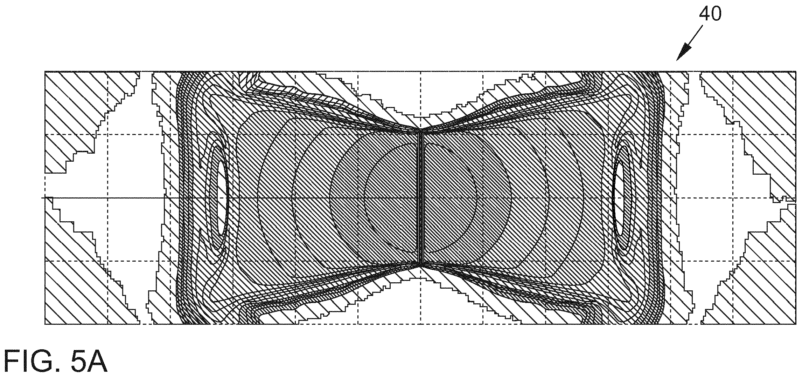

Mit Bezug zu den Figuren 5A bis 5C wird eine beispielhafte Simulation einer Intensitätsverteilung erläutert, wie sie durch das erfindungsgemäße Verfahren erzeugt werden kann. Dabei wird insbesondere von den oben beschriebenen Ausführungsbeispielen der Vorrichtung ausgegangen.

Um die für einen Scheinwerfer, insbesondere in einem Kraftfahrzeug, notwendigen hohen Beleuchtungsstärken zu erreichen, ist gemäß der Erfindung insbesondere die Ausführung der gezeigten Systeme mit einer verzerrenden Projektionsoptik vorgesehen. Die Projektionsoptik 16, 26a, 26b, 36 verzerrt die Lichtverteilung in dem hier dargestellten beispielhaften Fall so, dass die zentralen Bildpunkte des LCoS 14, 15, 24, 26, 34 kleiner abgebildet werden als weiter außen angeordnete Bildpunkte. Hierdurch kann die Beleuchtungsstärke im Zentrum erhöht werden und beispielsweise verkehrsrechtliche Anforderungen erfüllt werden.

Durch eine digitale Vorverzerrung kann die Verzerrung der Abbildung kompensiert werden, beispielsweise um eine Ausgangslichtemission mit einer ganz bestimmten Form der Lichtverteilung zu projizieren. Zu diesem Zweck kann bei einer Ausführungsform ferner vorgesehen sein, dass die Abbildungseigenschaften der Projektionsoptik erfasst und eine entsprechende vor Verzeichnung erzeugt wird.

Die Verzerrung des Bildes sorgt insbesondere dafür, dass die Auflösung der darstellbaren Lichtverteilung in verschiedenen Bereichen unterschiedlich groß ist, da die abgebildeten Bildpunkte unterschiedliche Flächen einnehmen. Gleichzeitig wird die Beleuchtungsstärke der Lichtverteilung für die auf einer kleineren Fläche abgebildeten Bildpunkte erhöht gegenüber den größeren Flächen der weiteren Bildpunkte.

Die Verzerrung kann so stark ausgebildet sein, dass die durch verkehrsrechtliche Vorgaben und Verkehrsbedingungen geforderten Beleuchtungsstärken erreicht werden. Je höhere Leuchtdichten durch die Lichtquelle 11, 21, 31 sowie die weiteren optischen Elemente der Vorrichtung bereitgestellt werden können, desto geringer kann die Verzerrung ausgeführt werden.

Figur 5A zeigt beispielhaft eine simulierte Beleuchtungsstärkeverteilung einer verzerrten Lichtverteilung. Dabei wird davon ausgegangen, dass ein Abbild eines rechteckig ausgebildeten LCoS 14, 15, 24, 25, 34 abgebildet wird, beispielsweise gemessen mittels einer Mattscheibe senkrecht zur zentralen Emissionsrichtung der Vorrichtung, wie dies zur Beurteilung von Fahrzeugscheinwerfern vorgesehen ist. Die in der Figur dargestellten Linien sollen Bereiche von im Wesentlichen gleicher Lichtintensität anzeigen. Dabei wird die Intensität zur Mitte hin größer.

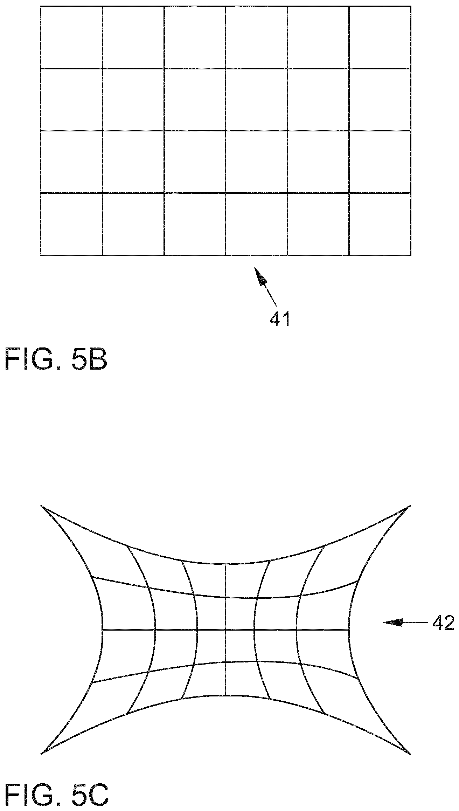

Figur 5B zeigt ein regelmäßiges Raster 41 von 4x6 Bildpunkten. Diese Abbildung repräsentiert beispielhaft die Anordnung der Bildpunkte auf einem rechteckigen LCoS 14, 15, 24, 26, 34. Figur 5C zeigt schematisch, wie das Raster 41 in der Gegenstandsebene mittels einer verzerrenden Projektionsoptik 16, 26a, 26b, 36 als verzerrtes Raster 42 in der Bildebene abgebildet werden kann. Hierbei werden in der Nähe des Zentrums angeordnete Bildpunkte kleiner als die äußeren Bildpunkte abgebildet, sodass der Lichtfluss in den Bereichen, in denen die mittleren Bildpunkte abgebildet werden, höher ist als in den äußeren Bereichen.

Der Einfluss der Abbildungseigenschaften der Projektionsoptik 16, 26a, 26b, 36 auf die Lichtintensität in den einzelnen Bereichen der Ausgangslichtemission ist relativ zu der Intensität zu verstehen, die einer unverzerrten Abbildung entsprechen würde. In Abhängigkeit von der Veränderung des Polarisationszustands durch die LCoS-Elemente 14, 15, 24, 25, 34 kann die Verteilung der Lichtintensität innerhalb der Ausgangslichtemission zusätzlich variiert werden. Durch die Abbildungseigenschaften der Projektionsoptik wird jedoch eine maximal erreichbare Lichtintensität in einem bestimmten Bereich vorgegeben, wie auch in Abhängigkeit von der Intensität der Lichtquelle 11, 21, 31 sowie weiteren Eigenschaften des optischen Systems.

Die Verzerrung durch die Projektionsoptik 16, 26a, 26b, 36 kann auf verschiedene Weise erfolgen, wobei die Bildpunkte in unterschiedlichen Bereichen größer oder kleiner abgebildet werden, was zu einem entsprechend höheren oder niedrigeren Lichtfluss führt.

Alternativ oder zusätzlich kann durch eine Überlagerung mehrerer Modulationen und/oder Lichtverteilungen die Ausgangslichtemission auf andere Weise gebildet werden. Dies kann durch eine Überlagerung von Ausgangsemissionen zweier oder mehrerer Vorrichtungen gemäß der Erfindung erfolgen. Ferner kann die erfindungsgemäße Vorrichtung zwei oder mehr Projektionsoptiken 26a, 26b aufweisen, wie oben mit Bezug zu Figur 3 erläutert. Ferner können in einem System, bei dem mehrere LCoS-Elemente 14, 15, 24, 25, 34 vorgesehen sind, mehrere unterschiedlich modellierte Verteilungen der Polarisationszustände erzeugt werden, beispielsweise bei dem oben mit Bezug zu Figur 2 erläuterten Fall, bei dem durch zwei LCoS-Elemente 14, 15 die transmittierten und reflektierten Anteile des Lichts separat voneinander moduliert werden.

### Bezugszeichenliste

- 1: Fahrzeug
- 2: Steuereinheit
- 3, 4: Scheinwerfer
- 5, 6: Vorrichtung
- 11: Lichtquelle
- 12: Beleuchtungsoptik
- 13: polarisierendes Strahlteilerelement
- 14, 15: Flüssigkristallelement; LCoS
- 16: Projektionsoptik
- 21: Lichtquelle
- 22: Beleuchtungsoptik
- 23a, 23b: polarisierendes Strahlteilerelement
- 24, 25: Flüssigkristallelement; LCoS
- 26a, 26b: Projektionsoptik
- 31: Lichtquelle
- 32: Beleuchtungsoptik
- 33: polarisierendes Strahlteilerelement
- 34: Flüssigkristallelement; LCoS
- 36: Projektionsoptik
- 37: Spiegel
- 40: Simulierte Helligkeitsverteilung (Abbildung)
- 41: Raster
- 42: verzerrtes Raster (Abbildung)

## Patentansprüche

1. Vorrichtung (5, 6) zum Erzeugen einer Ausgangslichtemission mit
einer Lichtquelle (21) zum Emittieren von Licht; und
einem ersten polarisierenden Strahlteilerelement (23a), das so angeordnet ist, dass zumindest ein Teil des emittierten Lichts darauf auftrifft, wobei ein erstes reflektiertes Lichtbündel eines ersten Polarisationszustands und ein zweites transmittiertes Lichtbündel eines zweiten Polarisationszustands erzeugbar sind; sowie
einem ersten Flüssigkristallelement (24), das zumindest zwei Zustände aufweist, die mittels einer Steuereinheit (2) ansteuerbar sind;
einem zweiten Flüssigkristallelement (25), wobei das zweite Flüssigkristallelement (25) dazu eingerichtet ist, das zweite Lichtbündel zumindest zum Teil zu reflektieren, wobei der Polarisationszustand des zweiten Lichtbündels in Abhängigkeit von dem Zustand des zweiten Flüssigkristallelements (25) veränderbar ist,
wobei das erste Flüssigkristallelement (24) dazu eingerichtet ist, das erste Lichtbündel zumindest zum Teil zu reflektieren, wobei der Polarisationszustand des ersten Lichtbündels in Abhängigkeit von dem Zustand des ersten Flüssigkristallelements (24) veränderbar ist;
wobei das erste polarisierende Strahlteilerelement (23a) ferner so angeordnet ist, dass das erste Lichtbündel nach der Reflexion an dem ersten Flüssigkristallelement (24) darauf auftrifft; und
das erste Lichtbündel zur Erzeugung der Ausgangslichtemission zumindest teilweise auskoppelbar ist,
**dadurch gekennzeichnet, dass**
die Vorrichtung (5, 6) ferner ein zweites polarisierendes Strahlteilerelement (23b) umfasst, auf welches das zweite transmittierte Lichtbündel trifft und
durch welches das zweite transmittierte Lichtbündel zur Erzeugung der Ausgangslichtemission zumindest teilweise auskoppelbar ist, und
die Ausgangslichtemission eine erste Komponente und eine zweite Komponente umfasst,
wobei die erste Komponente durch das erste polarisierende Strahlteilerelement (23a) auskoppelbar ist und die zweite Komponente durch das zweite polarisierende Strahlteilerelement (23b) auskoppelbar ist,
wobei die erste und die zweite Komponente an voneinander beabstandeten Positionen auskoppelbar sind.

2. Vorrichtung (5, 6) gemäß Anspruch 1,
**dadurch gekennzeichnet, dass**
das Flüssigkeitskristallelement (24, 25) als LCoS (24, 25) ausgebildet ist.

3. Vorrichtung (5, 6) gemäß einem der vorhergehenden Ansprüche,
**dadurch gekennzeichnet, dass**
die Vorrichtung (5, 6) ferner zumindest ein Kühlelement umfasst, durch welches das erste und/oder das zweite Flüssigkristallelement (24, 25) kühlbar ist.

4. Vorrichtung (5, 6) gemäß einem der vorhergehenden Ansprüche,
**dadurch gekennzeichnet, dass**
das erste und/oder zweite Flüssigkristallelement (24, 25) als erste und/oder zweite Matrix von Bildpunkten ausgebildet sind.

5. Vorrichtung (5, 6) gemäß einem der vorhergehenden Ansprüche,
**dadurch gekennzeichnet, dass**
zur Erzeugung der Ausgangslichtemission das erste und zweite Lichtbündel mittels einer Projektionsoptik (26a, 26b) auskoppelbar ist.

6. Vorrichtung (5, 6) gemäß einem der vorhergehenden Ansprüche,
**dadurch gekennzeichnet, dass**
zur Erzeugung der Ausgangslichtemission das erste Lichtbündel mittels einer ersten Projektionsoptik (26a) und das zweite Lichtbündel mittels einer zweiten Projektionsoptik (26b) zumindest teilweise auskoppelbar ist.

7. Vorrichtung (5, 6) gemäß Anspruch 5 oder 6,
**dadurch gekennzeichnet, dass**
die erste (16, 26a, 36) und/oder zweite Projektionsoptik (26b) dazu eingerichtet ist, anhand des eingekoppelten Lichtbündels die Ausgangslichtemission so zu erzeugen, dass diese eine Abbildung mit zumindest einem inneren und einem äußeren Bereich umfasst, wobei
die Abbildung so ausgebildet ist, dass der innere Bereich eine höhere Lichtintensität als der äußere Bereich aufweist.

8. Vorrichtung (5, 6) gemäß Anspruch 6 oder 7,
**dadurch gekennzeichnet, dass**
die Ausgangslichtemission eine Überlagerung von zumindest zwei Abbildungen umfasst, wobei die zumindest zwei Abbildungen durch zumindest zwei Projektionsoptiken (26a, 26b) gebildet werden.

9. Scheinwerfer (3, 4) mit zumindest einer Vorrichtung (5, 6) gemäß einem der Ansprüche 1 bis 8.

10. Scheinwerfer (3, 4) gemäß Anspruch 9,
**dadurch gekennzeichnet, dass**
der Scheinwerfer (3, 4) ferner zumindest eine Projektionsoptik (126a, 26b) mit Abbildungseigenschaften umfasst, durch welche das erste und/oder zweite Lichtbündel zur Erzeugung der Ausgangslichtemission auskoppelbar ist, wobei
die Abbildungseigenschaften der Projektionsoptik (26a, 26b) mittels einer Steuereinheit (2) einstellbar sind.

11. Verfahren zum Erzeugen einer Ausgangslichtemission, bei dem
durch eine Lichtquelle (21) Licht emittiert wird;
zumindest ein Teil des emittierten Lichts auf ein erstes polarisierendes Strahlteilerelement (23a) auftrifft, wobei ein erstes reflektiertes Lichtbündel eines ersten Polarisationszustands und ein zweites transmittiertes Lichtbündel eines zweiten Polarisationszustand erzeugt werden;
das erste Lichtbündel zumindest zum Teil durch ein erstes Flüssigkristallelement (24) reflektiert wird, wobei das erste Flüssigkristallelement (24) zumindest zwei Zustände aufweist, die mittels einer Steuereinheit (2) angesteuert werden, und wobei der Polarisationszustand des ersten Lichtbündels in Abhängigkeit von dem Zustand des ersten Flüssigkeitskristallelements (24) verändert wird;
das zweite Lichtbündel zumindest zum Teil durch ein zweites Flüssigkristallelement (25) reflektiert wird, wobei der Polarisationszustand des zweiten Lichtbündels in Abhängigkeit von dem Zustand des zweiten Flüssigkristallelements (25) verändert wird, und
das erste Lichtbündel nach der Reflexion an dem ersten Flüssigkristallelement (24) auf das erste polarisierende Strahlteilerelement (23a) auftrifft; und
das erste Lichtbündel zur Erzeugung der Ausgangslichtemission zumindest teilweise ausgekoppelt wird,
**dadurch gekennzeichnet, dass**
das zweite transmittierte Lichtbündel auf ein zweites polarisierendes Strahlteilerelement (23b) trifft, durch welches das zweite transmittierte Lichtbündel zur Erzeugung der Ausgangslichtemission zumindest teilweise ausgekoppelt wird, und
die Ausgangslichtemission eine erste Komponente und eine zweite Komponente umfasst,
wobei die erste Komponente durch das erste polarisierende Strahlteilerelement (23a) ausgekoppelt wird und die zweite Komponente durch das zweite polarisierende Strahlteilerelement (23b) ausgekoppelt wird,
wobei die erste und die zweite Komponente an voneinander beabstandeten Positionen ausgekoppelt werden.

## Claims

1. Device (5, 6) for generating an output light emission having
a light source (21) for emitting light; and
a first polarizing beam splitter element (23a) arranged such that at least some of the emitted light impinges thereon, wherein a first reflected light bundle of a first polarization state and a second transmitted light bundle of a second polarization state can be generated; as well as
a first liquid crystal element (24) which has at least two states which are controllable by means of a control unit (2);
and a second liquid crystal element (25), wherein the second liquid crystal element (25) is configured to reflect the second light bundle at least partially, wherein the polarization state of the second light bundle can be changed on the basis of the state of the second liquid crystal element (25),
wherein the first liquid crystal element (24) is configured to reflect the first light bundle at least partially, wherein the polarization state of the first light bundle can be changed on the basis of the state of the first liquid crystal element (24);
wherein the first polarizing beam splitter element (23a) is further arranged such that the first light bundle impinges thereon after reflection on the first liquid crystal element (24); and
the first light bundle can be at least partially coupled out in order to generate the output light emission,
**characterized in that**
the device (5, 6) further comprises a second polarizing beam splitter element (23b) on which the second transmitted light bundle impinges and
by which the second transmitted light bundle can be at least partially coupled out in order to generate the output light emission, and
the output light emission comprises a first component and a second component,
wherein the first component can be coupled out by the first polarizing beam splitter element (23a) and the second component can be coupled out by the second polarizing beam splitter element (23b),
wherein the first and second components can be coupled out at mutually spaced positions.

2. Device (5, 6) according to claim 1,
**characterized in that**
the liquid crystal element (24, 25) is in the form of LCoS (24, 25).

3. Device (5, 6) according to either of the preceding claims,
**characterized in that**
the device (5, 6) further comprises at least one cooling element by means of which the first and/or the second liquid crystal element (24, 25) can be cooled.

4. Device (5, 6) according to any of the preceding claims,
**characterized in that**
the first and/or second liquid crystal element (24, 25) is designed as a first and/or second matrix of image points.

5. Device (5, 6) according to any of the preceding claims,
**characterized in that**
the first and second light bundles can be coupled out by means of a projection lens (26a, 26b) in order to generate the output light emission.

6. Device (5, 6) according to any of the preceding claims,
**characterized in that**
the first light bundle can be at least partially coupled out by means of a first projection lens (26a) and the second light bundle can be at least partially coupled out by means of a second projection lens (26b) in order to generate the output light emission.

7. Device (5, 6) according to either claim 5 or claim 6,
**characterized in that**
the first (16, 26a, 36) and/or second projection lens (26b) is configured to generate the output light emission using the coupled-in light bundle such that said emission comprises an image having at least one inner and one outer region, wherein
the image is designed such that the inner region has a higher light intensity than the outer region.

8. Device (5, 6) according to either claim 6 or claim 7,
**characterized in that**
the output light emission comprises a superimposition of at least two images, wherein the at least two images are formed by at least two projection lenses (26a, 26b).

9. Headlight (3, 4) having at least one device (5, 6) according to any of claims 1 to 8.

10. Headlight (3, 4) according to claim 9,
**characterized in that**
the headlight (3, 4) further comprises at least one projection lens (126a, 26b) having imaging properties, by means of which the first and/or second light bundle can be coupled out in order to generate the output light emission, wherein
the imaging properties of the projection lens (26a, 26b) are adjustable by means of a control unit (2).

11. Method for generating an output light emission, in which
light is emitted by a light source (21);
at least some of the emitted light impinges on a first polarizing beam splitter element (23a), wherein a first reflected light bundle of a first polarization state and a second transmitted light bundle of a second polarization state are generated;
the first light bundle is reflected at least partially by a first liquid crystal element (24), wherein the first liquid crystal element (24) has at least two states which are controlled by means of a control unit (2), and wherein the polarization state of the first light bundle is changed on the basis of the state of the first liquid crystal element (24);
the second light bundle is reflected at least partially by a second liquid crystal element (25), wherein the polarization state of the second light bundle is changed on the basis of the state of the second liquid crystal element (25), and
the first light bundle impinges on the first polarizing beam splitter element (23a) after reflection on the first liquid crystal element (24); and
the first light bundle is at least partially coupled out in order to generate the output light emission,
**characterized in that**
the second transmitted light bundle impinges on a second polarizing beam splitter element (23b) by means of which the second transmitted light bundle is at least partially coupled out in order to generate the output light emission, and
the output light emission comprises a first component and a second component,
wherein the first component is coupled out by the first polarizing beam splitter element (23a) and the second component is coupled out by the second polarizing beam splitter element (23b),
wherein the first and the second components are coupled out at mutually spaced positions.

## Revendications

1. Dispositif (5, 6) servant à produire une émission de lumière de sortie avec
une source de lumière (21) servant à émettre de la lumière ; et
un premier élément diviseur de faisceau (23a) polarisant, qui est disposé de telle manière qu'au moins une partie de la lumière émise y est appliquée, dans lequel un premier faisceau lumineux réfléchi d'un premier état de polarisation et un deuxième faisceau lumineux transmis d'un deuxième état de polarisation peuvent être produits ; ainsi que
un premier élément à cristaux liquides (24), qui présente au moins deux états pouvant être pilotés au moyen d'une unité de commande (2) ;
un deuxième élément à cristaux liquides (25), dans lequel le deuxième élément à cristaux liquides (25) est conçu pour réfléchir le deuxième faisceau lumineux au moins en partie, dans lequel l'état de polarisation du deuxième faisceau lumineux peut être modifié en fonction de l'état du deuxième élément à cristaux liquides (25),
dans lequel le premier élément à cristaux liquides (24) est conçu pour réfléchir au moins en partie le premier faisceau lumineux, dans lequel l'état de polarisation du premier faisceau lumineux peut être modifié en fonction de l'état du premier élément à cristaux liquides (24) ;
dans lequel le premier élément diviseur de faisceau (23a) polarisant est en outre disposé de telle sorte que le premier faisceau lumineux y est appliqué après avoir été réfléchi sur le premier élément à cristaux liquides (24) ; et
le premier faisceau lumineux peut être découplé au moins en partie afin de produire l'émission de lumière de sortie,
**caractérisé en ce que**
le dispositif (5, 6) comprend en outre un deuxième élément diviseur de faisceau (23b) polarisant, sur lequel le deuxième faisceau lumineux transmis est appliqué et
par lequel le deuxième faisceau lumineux transmis peut être découplé au moins en partie afin de produire l'émission de lumière de sortie et
l'émission de lumière de sortie comprend une première composante et une deuxième composante,
dans lequel la première composante peut être découplée par le premier élément diviseur de faisceau (23a) polarisant et la deuxième composante peut être découplée par le deuxième élément diviseur de faisceau (23b) polarisant,
dans lequel les première et deuxième composantes peuvent être découplées au niveau de positions espacées l'une de l'autre.

2. Dispositif (5, 6) selon la revendication 1,
**caractérisé en ce que**
l'élément à cristaux liquides (24, 25) est conçu comme un LCoS (24, 25).

3. Dispositif (5, 6) selon l'une quelconque des revendications précédentes,
**caractérisé en ce que**
le dispositif (5, 6) comprend en outre au moins un élément de refroidissement, par lequel le premier et/ou le deuxième élément à cristaux liquides (24, 25) peuvent être refroidis.

4. Dispositif (5, 6) selon l'une quelconque des revendications précédentes,
**caractérisé en ce que**
le premier et/ou le deuxième élément à cristaux liquides (24, 25) sont conçus comme première et/ou deuxième matrice de pixels.

5. Dispositif (5, 6) selon l'une quelconque des revendications précédentes,
**caractérisé en ce que**
le premier et le deuxième faisceau lumineux peuvent être découplés au moyen d'une optique de projection (26a, 26b) pour la production de l'émission de lumière de sortie.

6. Dispositif (5, 6) selon l'une quelconque des revendications précédentes,
**caractérisé en ce que**
le premier faisceau lumineux peut être découplé au moins en partie au moyen d'une première optique de projection (26a) et le deuxième faisceau lumineux peut être découplé au moins en partie au moyen d'une deuxième optique de projection (26b) pour la production de l'émission de lumière de sortie.

7. Dispositif (5, 6) selon la revendication 5 ou 6,
**caractérisé en ce que**
la première (16, 26a, 36) et/ou la deuxième optique de projection (26b) sont conçues pour produire, à l'aide du faisceau de lumière couplé, l'émission de lumière de sortie de sorte que celle-ci comprenne une illustration avec au moins une zone interne et une zone externe, dans lequel
l'illustration est conçue de telle manière que la zone interne présente une intensité lumineuse supérieure à la zone externe.

8. Dispositif (5, 6) selon la revendication 6 ou 7,
**caractérisé en ce que**
l'émission de lumière de sortie comprend une superposition d'au moins deux illustrations, dans lequel les au moins deux illustrations sont formées par au moins deux optiques de projection (26a, 26b).

9. Phare (3, 4) comprenant au moins un dispositif (5, 6) selon l'une quelconque des revendications 1 à 8.

10. Phare (3, 4) selon la revendication 9,
**caractérisé en ce que**
le phare (3, 4) comprend en outre au moins une optique de projection (126a, 26b) avec des propriétés d'illustration, par laquelle le premier et/ou le deuxième faisceau lumineux peuvent être découplés pour la production de l'émission de lumière de sortie, dans lequel
les propriétés d'illustration de l'optique de projection (26a, 26b) peuvent être réglées au moyen d'une unité de commande (2).

11. Procédé de production d'une émission de lumière de sortie, dans lequel
de la lumière est émise par une source de lumière (21) ;
au moins une partie de la lumière émise est appliquée sur un premier élément diviseur de faisceau (23a) polarisant, dans lequel un premier faisceau lumineux réfléchi d'un premier état de polarisation est produit et un deuxième faisceau lumineux transmis d'un deuxième état de polarisation est produit ;
le premier faisceau lumineux est réfléchi au moins en partie par un premier élément à cristaux liquides (24), dans lequel le premier élément à cristaux liquides (24) présente au moins deux états, qui sont pilotés au moyen d'une unité de commande (2) et dans lequel l'état de polarisation du premier faisceau lumineux est modifié en fonction de l'état du premier élément à cristaux liquides (24) ;
le deuxième faisceau lumineux est réfléchi au moins en partie par un deuxième élément à cristaux liquides (25), dans lequel l'état de polarisation du deuxième faisceau lumineux est modifié en fonction de l'état du deuxième élément à cristaux liquides (25) et
le premier faisceau lumineux, après avoir été réfléchi sur le premier élément à cristaux liquides (24), est appliqué sur le premier élément diviseur de faisceau (23a) polarisant ; et
le premier faisceau lumineux est découplé au moins en partie afin de produire l'émission de lumière de sortie,
**caractérisé en ce que**
le deuxième faisceau lumineux transmis est appliqué sur un deuxième élément diviseur de faisceau (23b) polarisant, par lequel le deuxième faisceau lumineux transmis est découplé au moins en partie pour la production de l'émission de lumière de sortie et
l'émission de lumière de sortie comprend une première composante et une deuxième composante,
dans lequel la première composante est découplée par le premier élément diviseur de faisceau (23a) polarisant et la deuxième composante est découplée par le deuxième élément diviseur de faisceau (23b) polarisant,
dans lequel les première et deuxième composantes sont découplées au niveau de positions espacées l'une de l'autre.
